# EUROPÄISCHE PATENTSCHRIFT

(11) **EP 1 664 760 B1**
(45) Veröffentlichungstag und Bekanntmachung des Hinweises auf die Patenterteilung: **16.07.2008**
(21) Anmeldenummer: 04765409.0
(22) Anmeldetag: 20.09.2004
(51) Int. Cl.: G01N 33/00, G01N 27/416, H01F 38/14, H01R 13/66

(54) **STECKMODUL FÜR EINEN FLÜSSIGKEITS- ODER GASSENSOR MIT GALVANISCH ENTKOPPELTER ÜBERTRAGUNGSSTRECKE**
PLUG-IN MODULE FOR A LIQUID SENSOR OR GAS SENSOR COMPRISING A GALVANICALLY DECOUPLED TRANSMISSION LINK
MODULE ENFICHABLE POUR UN CAPTEUR DE LIQUIDE OU DE GAZ A VOIE DE TRANSMISSION DECOUPLEE PAR VOIE GALVANIQUE

(30) Priorität: 23.09.2003 DE 10344262
(43) Veröffentlichungstag der Anmeldung: 07.06.2006
(73) Patentinhaber: Endress + Hauser Conducta Gesellschaft für Mess- und Regeltechnik mbH + Co.KG., 70839 Gerlingen (DE)
(72) Erfinder: WITTMER, Detlev, 75433 Maulbronn (DE)
(74) Vertreter: Andres, Angelika Maria
(86) Internationale Anmeldenummer: PCT/EP2004/010523
(87) Internationale Veröffentlichungsnummer: WO 2005/031339

(56) Entgegenhaltungen:
- EP-A- 1 143 239
- EP-A- 1 206 012
- WO-A-01/14873
- WO-A-96/12946
- WO-A-20/04086030
- US-A- 5 124 661
- US-A1- 2003 102 872

## Beschreibung

Die vorliegende Erfindung betrifft ein Steckmodul für einen Flüssigkeits- oder Gassensor gemäß dem Oberbegriff des Anspruchs 1. Flüssigkeits- oder Gassensoren werden eingesetzt um pH-Werte oder Redox-Potentiale, Temperaturen, Leitfähigkeiten oder Trübungen bei Flüssigkeiten zu messen.

Im Folgenden wird im wesentlichen von potentiometrischen Sensoren, als Beispiel für einen Flüssigkeits- bzw. Gassensor die Rede sein. Potentiometrische Sensoren werden vor allem eingesetzt, um Potentiale bei großen Widerständen wie dies bei pH-Messungen und Redox-Messungen der Fall ist, zu bestimmen. Mit Hilfe von pH-Elektroden bzw. Redox-Elektroden werden die Potentiale der Lösungen erfasst.

Diese Elektroden sind in vielen Anwendungsfällen starkem Verschleiß ausgesetzt, so dass sie häufig nach kurzer Betriebszeit ausgetauscht werden müssen.

Es gibt sehr einfach aufgebaute pH-Sensoren die nur aus einer pH-Elektrode ohne jegliche Elektronikbauteile bestehen. Diese pH-Elektroden liefern einen pH-abhängiges Potential, welches an geeigneten elektrischen Anschlüssen abgreifbar ist. Optional weisen diese pH-Elektroden zur Temperaturkompensation einen integrierten Temperatursensor, z. B. PT100, auf, dessen Potential an geeigneten Temperaturausgängen abgreifbar ist. Zum Messen werden diese pH-Sensoren gewöhnlich über ein Kabel an einem Transmitter angeschlossen, der aus dem pH-abhängigen Potential und gegebenenfalls dem Temperatursignal des Temperatursensors ein Messsignal generiert.

Neben den beschriebenen einfachen pH-Elektroden bzw. Sensoren gibt es auch welche mit integriertem Vorverstärker zur Impedanz-Wandlung. Das Ausgangssignal des Vorverstärkers ist das Potential des pH-Sensors, wobei jedoch anstelle des Innenwiderstands des pH-Sensors, der in der Größenordnung von 100 MΩ liegt, nunmehr der Innenwiderstand des Vorverstärkers mit einigen Ω ausschlaggebend. Daher ist die weitere Übertragung und Verarbeitung des Ausgangspotentials zu einem Transmitter erheblich vereinfacht. Der Vorverstärker wird entweder über eine Batterie gespeist oder über ein Kabel mit Spannung versorgt.

Weiterhin sind unter dem Namen Direct Line der Firma Honeywell einfache Transmitter erhältlich, welche direkt auf die pH-Sensoren montiert werden. Damit ist es möglich, in unmittelbarer Nähe des Sensors z. B. ein 4-20 mA Messsignal zu generieren, welches dann ohne weiteres zur Warte übertragen werden kann.

Bei allen bekannten pH-Elektroden bzw. pH-Sensoren ist es erforderlich die Elektroden nach dem Anschluss an den Transmitter zu kalibrieren, um die ermittelten Kalibrierungsparameter im Transmitter abspeichern zu können. Sensorspezifische Informationen wie Messstellenbezeichnung etc. sind in der Regel vor Ort also in unmittelbarer Nähe des Sensors nicht erhältlich.

Aus der EP 1206012 ist auch ein pH-Sensor bekannt, der von der Fa. Endress + Hauser unter dem Namen MemoSens angeboten wird, der aus einem Sensormodul und einem Sensormodulkopf besteht, die zusammensteckbar sind. Die Daten-und Energieübertragung zwischen Sensormodul und Sensormodulkopf erfolgt kontaktlos über eine Verbindungsstrecke die zur galvanischen Entkopplung dient. Weiterhin ist ein Sensormodul im digitalen Speicher vorgesehen, in dem u. a. Kalibrierungsparameter abgespeichert sind. Ein entsprechender Gassensor wird in der nicht vorveröffentlichen WO2004/086030 beschrieben.
Bisher ist es nicht möglich, die Funktionsfähigkeit eines pH-Sensors in einfacher Weise zu überprüfen. In der Warte muss man sich auf den sicheren Datentransfer auf dem Weg vom Sensor zur Warte verlassen.

Aufgabe der Erfindung ist es deshalb ein Steckmodul für einen potentiometrischen Sensor anzugeben, das eine Überprüfung des an die Warte gesendeten Messwertes ermöglicht und das einfach und kostengünstig herstellbar ist.

Gelöst wird diese Aufgabe durch das in Anspruch 1 angegebene Steckermodul für potentiometrische Sensoren, zur Erzeugung eines simulierten digitalen Messwertes.

Ein Steckmodul für einen Sensor, das einen simulierten analogen Messwert erzeugt, ist aus US 5124661 bekannt.

Nachfolgend ist die Erfindung anhand eines in der Zeichnung dargestellten Ausführungsbeispiels näher erläutert.

Es zeigen:
Fig. 1 Sensormodul in schematischer Darstellung;
Fig. 2 Sensormodulkopf in schematischer Darstellung;
Fig. 3 erfindungsgemäßes Steckmodul zur Messwertsimulation.

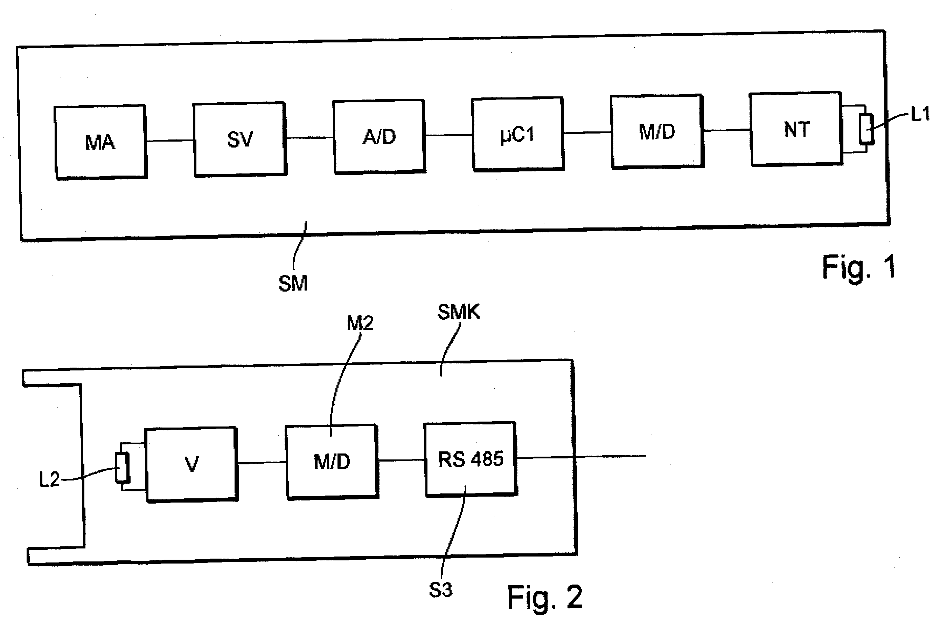

In Fig. 1 ist ein Sensormodul SM näher dargestellt. Das Sensormodul SM besteht aus einem Messwertaufnehmer (z. B. einer Glaselektrode), die in die zu messende Flüssigkeit eingetaucht wird. Der Messwertaufnehmer liefert ein analoges Messsignal, das in einer analogen Signalverarbeitungseinheit vorverarbeitet wird. Anschließend wird das aufbereitete analoge Messsignal in einem analog Digitalwandler AD in einem Digitalwert umgewandelt, der in einem Mikrocontroller µC1 weiterverarbeitet wird. Der Mikrocontroller µC1 ist über ein Modem und einem Netzteil NT mit einer Spule L1 verbunden. Über das Netzteil NT wird das gesamte Sensormodul SM mit Spannung versorgt. Passend zum Sensormodul SM ist ein Sensormodulkopf ausgebildet, der in Fig. 2 näher dargestellt ist. Beim Sensormodulkopf SMK ist eine Spule L2 über einen Verstärker V mit einem Modem M2 verbunden, das mit einer Schnittstelle S3 verbunden ist. Bei der Schnittstelle S3 handelt es sich um eine übliche RS485- Schnittstelle, die zur Datenkommunikation mit einem nicht näher dargestellten Messumformer dient. Sensormodul SM und Sensormodulkopf SMK sind steckbar miteinander verbindbar. Über die Spulen L1 und L2 Daten-und Energieaustausch möglich. Die beiden Module sind so galvanisch entkoppelt.

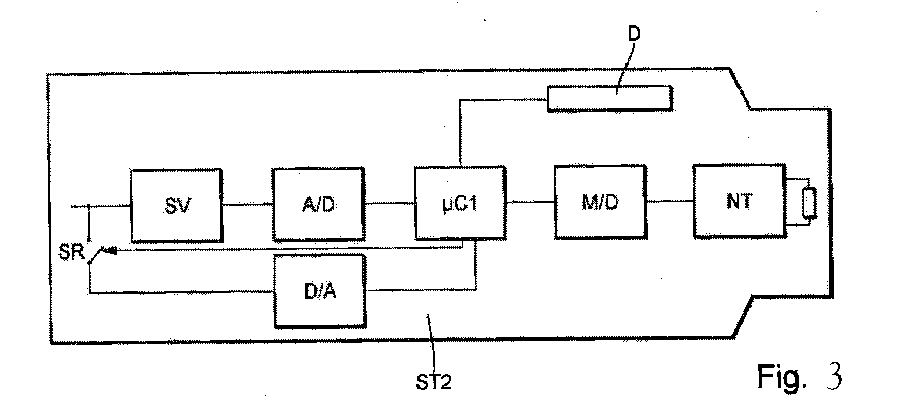

In Fig. 3 ist ein Steckmodul ST2 schematisch dargestellt, das zur Simulation eines pH-Wertes dient. Das Steckmodul ST2 ähnlich zum Sensormodul SM aufgebaut. Es weist jedoch keinen Messwertaufnehmer MA auf. Vor der analogen Signalverarbeitungseinheit SV ist ein Schalter SR angeordnet, der vom Mikrocontroller µC1 bedient wird. Weiterhin ist ein Digital-Analog-Wandler DA vorgesehen, der ebenfalls mit dem Schalter SR verbunden ist. Mit Hilfe des Digital-Analog-Wandlers DA kann eine vorgegebene Spannung erzeugt werden, die der Signalverarbeitungseinheit SV eine Messspannung vortäuscht. Im Display D, das ebenfalls mit dem Mikrocontroller µC1 verbunden ist, kann der simulierte Messwert (pH-Wert) dargestellt werden. Die Datenübertragung zwischen Steckmodul ST2 und z. B. einer Warte erfolgt ebenfalls über einen Sensormodulkopf SMK. Steckmodul ST2 ist als Schlüsselanhänger ausgebildet und kann so einfach, z. B. von ServicePersonal mitgeführt werden.

## Patentansprüche

1. Steckmodul (ST2) für einen Flüssigkeits- oder Gassensor der aus einem Sensormodul (SM) und ein Sensormodulkopf (SMK) aufgebaut ist, die steckbar miteinander verbindbar sind und die im zusammengesetzten Zustand einen Daten- und Energieaustausch über eine galvanisch entkoppelte Verbindung ermöglichen, wobei
das Steckmodul (ST2) mit dem Sensormodulkopf (SMK) verbindbar ist und **dadurch gekennzeichnet dass** das Steckmodul (ST2) eine Simulationseinheit aufweist, die so eingerichtet ist, dass sie einen analogen Signalwert erzeugt, der einem vorgegebenen Messwert entspricht und der in einer Signalverarbeitungseinheit in einen digitalen Messwert umgewandelt **wird,** der zum Sensormodulkopf (SMK) weitergeleitet wird.

2. Steckmodul gemäß Anspruch 1, **dadurch gekennzeichnet, dass** es als Schlüsselanhänger ausgebildet ist.

## Claims

1. Plug-in module (ST2) for a liquid or gas sensor that is constructed from a sensor module (SM) and a sensor module head (SMK), which can be plugged together and which, in a connected state, permit the exchange of data and energy via a galvanically isolated connection, where
the plug-in module (ST2) can be connected to the sensor module head (SMK) and **characterized in that** the plug-in module (ST2) exhibits a simulation unit that is configured such that it generates an analog signal value, which corresponds to a specified measured value and which is converted in a signal processing unit to a digital measured value that is forwarded to the sensor module head (SMK).

2. Plug-in module in accordance with Claim 1 **characterized in that** it is designed as a key ring.

## Revendications

1. Module enfichable (ST2) destiné à un capteur de liquide ou de gaz, lequel est composé d'un module capteur (SM) et d'une tête de module capteur (SMK), qui peuvent être interconnectés au moyen d'une liaison amovible et qui, à l'état assemblé, permettent un échange de données et d'énergie par le biais d'une liaison à découplage galvanique, pour lequel
le module enfichable (ST2) peut être relié avec la tête de module capteur (SMK) et est **caractérisé en ce que** le module enfichable (ST2) comporte une unité de simulation, qui génère une valeur de signal analogique, qui est réglée de telle manière à correspondre à une valeur mesurée prédéfinie et qui est convertie dans une unité de traitement de signal en une valeur mesurée numérique, qui est transmise à la tête de module capteur (SMK).

2. Module enfichable selon la revendication 1, **caractérisé en ce qu'**il est conçu sous la forme d'un porte-clé.
